# EUROPEAN PATENT SPECIFICATION

(11) **EP 0 772 737 B1**
(45) Date of publication and mention of the grant of the patent: **14.10.1998**
(21) Application number: 95926482.1
(22) Date of filing: 21.07.1995
(51) Int. Cl.: F02M 45/04, F02D 41/40, F02D 41/38

(54) **COMMON-RAIL FUEL INJECTION METHOD FOR DIESEL ENGINES**
HOCHDRUCKKRAFTSTOFFEINSPRITZVERFAHREN FÜR DIESELMOTOREN
PROCEDE D'INJECTION DE CARBURANT PAR RAIL COMMUN POUR MOTEURS DIESEL

(30) Priority: 22.07.1994 IT TO940608
(43) Date of publication of application: 14.05.1997
(73) Proprietor: C.R.F. Societa' Consortile per Azioni, 10043 Orbassano (Torino) (IT)
(72) Inventor: BURATTI, Riccardo, I-16100 Genova (IT); CANALE, Silvio, I-10092 Collegno (IT)
(74) Representative: Jorio, Paolo
(86) International application number: IT9500122
(87) International publication number: WO9603578

(56) References cited:
- EP-A- 0 570 986
- US-A- 4 543 930
- US-A- 4 841 936
- US-A- 5 119 780
- PATENT ABSTRACTS OF JAPAN vol. 18, no. 212 (M-1593) 15 April 1994 & JP,A,60 010 673 (SHINNENSHIYOU SYST KENKYUSHO,KK) 18 January 1994

## Description

### TECHNICAL FIELD

The present invention relates to a diesel engine rail injection method.

### BACKGROUND ART

As is known, to safeguard the environment, increasing effort is being made, and in many countries tighter restrictions are being imposed, to control the exhaust of internal combustion engines.

As regards diesel engines in particular, the main problems are due to the presence in the exhaust gas of nitric oxides (NOₓ) and particulates, as opposed to a very low content of carbon monoxide (CO) and hydrocarbons (HC).

Though various highly successful solutions have been proposed for reducing the nitric oxide and particulate content, further improvement is called for to conform with the increasingly lower pollutant levels required by current regulations.

EP-A-0 570 986 discloses a diesel engine rail injection method comprising a main injection phase and an auxiliary pre-injection phase (pilot injection).

US-A-5 119 780 describes a method for operating an internal combustion engine having a low pressure and a high pressure injector for each combustion chamber. The low pressure injector injects a pilot fuel charge when the combustion chamber is near its maximum volume, that is in the final part of the induction stroke.

### DISCLOSURE OF INVENTION

It is an object of the present invention to provide a method of reducing the nitric oxide and soot content of diesel internal combustion engine exhaust gas.

According to the present invention, there is provided a diesel engine rail injection method comprising a main injection phase and an auxiliary pre-injection phase; characterized in that said auxiliary pre-injection phase is performed at the start of the induction stroke of the engine.

### BRIEF DESCRIPTION OF DRAWINGS

A preferred, non-limiting embodiment of the present invention will be described by way of example with reference to the accompanying drawings, in which:
Figure 1 shows a block diagram of a known diesel engine injection system;
Figure 2 shows a graph of pressure and injection, in relation to the engine strokes, according to the present invention.

### BEST MODE FOR CARRYING OUT THE INVENTION

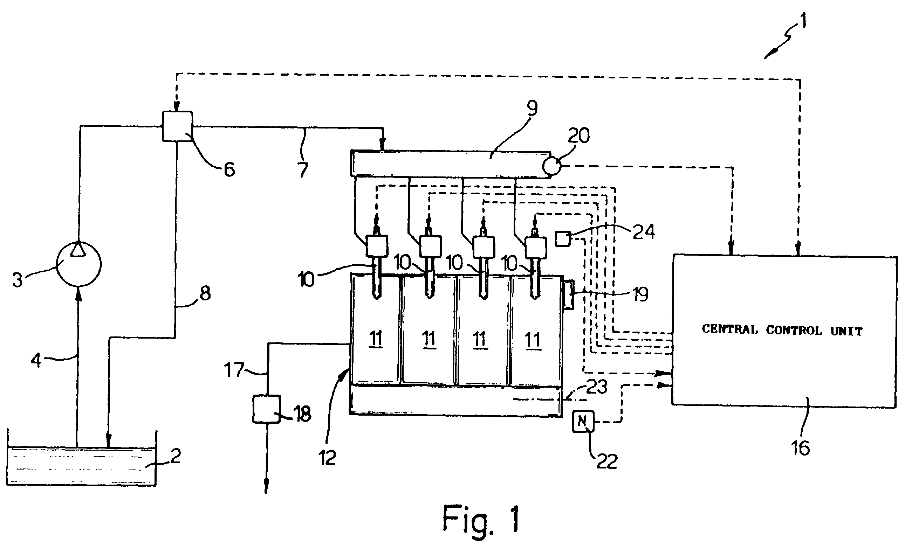

Figure 1 shows schematically a diesel engine rail injection system 1 of the type to which the present invention relates. Of system 1, only the parts pertinent to the present invention are shown, the fuel conduits being indicated by continuous lines, and the dotted lines indicating the electric lines supplying the control and measured quantity signals.

System 1 comprises:
- a fuel (diesel fuel) tank 2:
- a high-pressure supply pump 3 connected to tank 2 by a low-pressure conduit 4;
- a pressure regulator 6 along a high-pressure line 7;
- a low-pressure fuel return conduit 8 between pressure regulator 6 and tank 2;
- a high-pressure fuel rail 9 connected to conduit 7 and presenting one or more elements for connection to the injectors;
- a number of injectors 10 - one for each cylinder 11 of engine 12 - connected to rail 9;
- a power control unit (central control unit) 16 for governing the system components on the basis of signals from various sensors, memorized maps, and the control strategy implemented;
- a combustion product exhaust conduit 17 connected to the exhaust manifold (not shown) of engine 12;
- a particulate filter 18 along exhaust conduit 17;
- an intake manifold 19;
- a pressure sensor 20 on rail 9;
- an engine speed and stroke sensor 22 on the output shaft 23 of the engine; and
- a cycle sensor 24 on the camshaft.

Pressure regulator 6, injectors 10, pressure sensor 20, engine speed and stroke sensor 22, and cycle sensor 24 are connected to central unit 16 over electric data and control exchange lines.

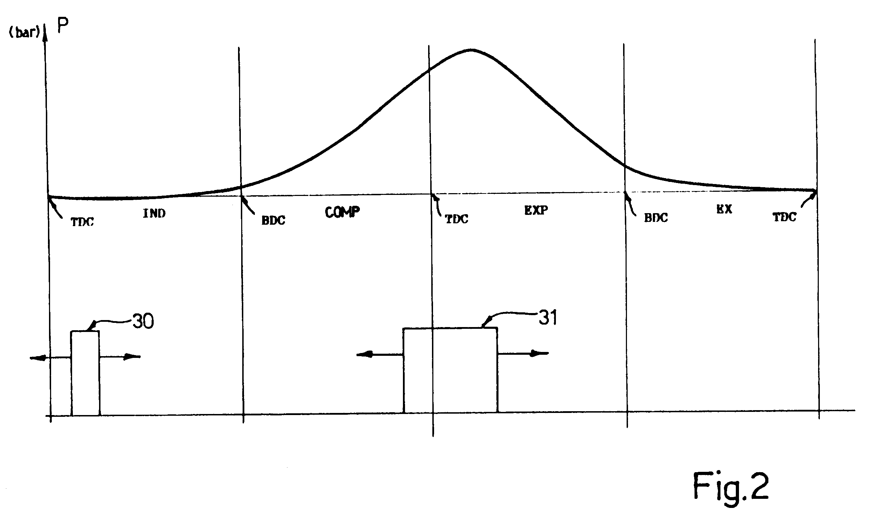

According to the present invention, in addition to the main injection phase controlled in the normal way by central unit 16, injection system 1 also provides for pre-injecting fuel into cylinders 11 at the start of the induction stroke, as shown schematically in Figure 2 wherein a first graph shows the pressure at the various strokes of each cylinder; a second graph shows the location of the pre-injection (30) and main injection (31) phases; TDC indicates top dead center, BDC bottom dead center, IND the induction stroke, COMP the compression stroke, EXP the expansion stroke, and EX the exhaust stroke. The arrows to the right and left of the pre-injection and main injection phases in Figure 2 are to indicate the possibility of their varying in location and length - being advanced, delayed, lengthened or shortened - as compared with the example shown, to take into account the operating conditions of the engine, as is customary for the main injection phase.

According to the present invention, the pre-injection phase comprises the injection of a small quantity of fuel directly into the cylinders at the induction stroke IND, and is preferably performed at the start of the induction stroke IND to ensure a good mixture. This way, as the pressure in the cylinders increases during the compression stroke COMP, partially oxidized and/or peroxidized complex products with a strong chemical affinity are formed, and which act as combustion accelerators for minimizing ignition lag of the main injection phase. More specifically, the presence of combustion accelerators in the air supply provides for rapid ignition of the atomized fuel injected at the main injection phase, thus achieving steady combustion, with gradients controlled basically by the injection pattern as opposed to uncontrolled spontaneous ignition of large quantities of fuel. Being steadier, and by virtue also of improving the timing of the main jet, such combustion therefore provides for reducing the formation of nitric oxides and soot.

As for the main injection phase, pre-injection parameters (fuel quantity, duration, advance) are determined by central unit 16 according to the operating conditions of the engine - engine speed N (determined by sensor 22) , engine load, fluid temperature (data normally already available for other processing functions performed by the central unit) - and preferably using maps stored in the central unit itself.

In the Applicant's experience, the pre-injection phase according to the present invention is particularly advantageous at medium-low engine speeds and under partial load conditions (below 50-60%), but may also be employed in other conditions, particularly transient states.

Since, in practice, the function of the pre-injection phase according to the present invention consists in preparing the environment inside cylinders 11 by producing ignition lag reducing compounds, it is advantageously performed in all the cylinders when the operating conditions provided for by central unit 16 exist.

With an electronic rail injection system of the type described, the pre-injection phase is performed with no difficulty by virtue of injection being controlled electronically by the control signals supplied by central unit 16 to injectors 10, and timing in relation to the engine strokes being fully flexible and in no way restricted by characteristics inherent in the system.

The advantages of the present invention will be clear from the foregoing description. In particular, by virtue of injecting minute quantities of fuel and improving combustion performance, pre-injection according to the present invention provides for reducing clogging of any exhaust filters downstream from the engine (which, as is known, results in increased fuel consumption) with substantially no increase in fuel consumption.

Clearly, changes may be made to the method as described and illustrated herein. In particular, and as already stated, the pre-injection phase may be timed differently as compared with the example shown, to ensure optimum operating conditions.

## Claims

1. A diesel engine rail injection method comprising a main injection phase and an auxiliary pre-injection phase, characterized in that said auxiliary pre-injection phase is performed at the start of the induction stroke of the engine.

2. A method as claimed in Claim 1, characterized in that said pre-injection phase comprises the injection of a given quantity of fuel into the engine cylinders.

3. A method as claimed in Claim 2, characterized in that said pre-injection phase comprises the injection of a quantity of fuel equal to a few percent of the fuel quantity injected during the main injection phase.

4. A method as claimed in any one of the foregoing Claims, characterized in that said pre-injection phase is performed predominantly in medium-low engine speed, partial load, or transient state conditions with parameter control by means of an electronic central control unit.

## Patentansprüche

1. Schieneneinspritzverfahren für einen Dieselmotor, wobei das Verfahren eine Haupteinspritzphase und eine zusätzliche Voreinspritzphase aufweist,
dadurch gekennzeichnet, daß die zusätzliche Voreinspritzphase zu Beginn des Saughubs des Motors durchgeführt wird.

2. Verfahren nach Anspruch 1,
dadurch gekennzeichnet, daß die Voreinspritzphase das Einspritzen einer gegebenen Kraftstoffmenge in die Motorzylinder aufweist.

3. Verfahren nach Anspruch 2,
dadurch gekennzeichnet, daß die Voreinspritzphase das Einspritzen einer Kraftstoffmenge aufweist, die gleich einigen wenigen Prozent der Kraftstoffmenge ist, die während der Haupteinspritzphase eingespritzt wird.

4. Verfahren nach einem der vorhergehenden Ansprüche,
dadurch gekennzeichnet, daß die Voreinspritzphase hauptsächlich unter Bedingungen einer mittleren-niedrigen Motordrehzahl, einer Teillast oder eines Übergangs zustands durchgeführt wird, wobei die Parametersteuerung durch eine elektronische zentrale Steuereinheit erfolgt.

## Revendications

1. Procédé d'injection par rail pour moteur diesel comportant une phase d'injection principale et une phase de préinjection auxiliaire; caractérisé par le fait que ladite phase de préinjection auxiliaire s'effectue au début de la course d'admission du moteur.

2. Procédé comme revendiqué dans la revendication 1, caractérisé par le fait que ladite phase de pré-injection comporte l'injection d'une quantité donnée de carburant dans les cylindres du moteur.

3. Procédé comme revendiqué dans la revendication 2, caractérisé par le fait que ladite phase de pré-injection comporte l'injection d'une quantité de carburant égale à quelques pour-cents de la quantité de carburant injectée au cours de la phase d'injection principale.

4. Procédé comme revendiqué dans l'une quelconque des revendications précédentes, caractérisé par le fait que ladite phase de pré-injection s'effectue principalement dans des conditions de vitesse moyenne-basse du moteur, de charge partielle ou d'état transitoire, avec commande des paramètres par une unité centrale électronique de commande.
